# EUROPEAN PATENT APPLICATION

(11) **EP 4 170 886 A1**
(43) Date of publication of application: **26.04.2023**
(21) Application number: 20940562.0
(22) Date of filing: 19.06.2020
(51) Int. Cl.: H02M 7/48

(54) **SWITCHING ELEMENT SHORT-CIRCUIT DETECTION METHOD, INVERTER DEVICE, AND HAND-DRYING DEVICE**

(71) Applicant: MITSUBISHI ELECTRIC CORPORATION, Chiyoda-ku Tokyo 100-8310 (JP)
(72) Inventor: FUJIMURA, Tatsuya, Tokyo 100-8310 (JP); FUKUDA, Yuki, Tokyo 100-8310 (JP)
(74) Representative: Witte, Weller & Partner Patentanwälte mbB
(86) International application number: PCT/JP2020/024210
(87) International publication number: WO 2021/255928

(57) **Abstract**

An inverter device (60) includes: an inverter circuit (50) including switching elements (3 to 8); drive circuits (9 to 14) that individually drive the switching elements (3 to 8); capacitors (15 to 17) serving as a power supply of the drive circuits (9 to 11) of the switching elements (3 to 5) of upper arm; and a control unit (21) that controls an operation of the inverter circuit (50). The control unit (21) turns on the switching element (6) of lower arm for a time shorter than a load short-circuit tolerance of the switching element (6) of lower arm, checks a presence or absence of a short circuit of a leg (40) including the switching element (6) of lower arm, and then turns on the switching element (6) of lower arm of the leg (40) when checking a presence or absence of a short circuit of a leg (41) or a leg (42) having a phase different from that of the leg (40).

## Description

### Field

The present disclosure relates to an inverter device, a short-circuit detection method for a switching element included in the inverter device, and a hand dryer device equipped with the inverter device.

### Background

The inverter device includes a switching element that is a drive element. The inverter device is a power conversion device that converts a DC input into an AC output by performing pulse width modulation control on the switching element.

In this type of inverter device, two switching elements are mutually connected in series to constitute a leg for one phase, and at least two legs connected in series are connected in parallel with each other to form a bridge circuit. To both ends of the bridge circuit, a DC power supply is connected. In a switching element group connected in series, a switching element connected to a positive electrode side of the DC power supply is referred to as an "switching element of upper arm" or simply as an "upper arm", while a switching element connected to a negative electrode side of the DC power supply is referred to as a "switching element of lower arm" or simply as a "lower arm".

In a case where any of the switching elements of upper arm or lower arm has a short-circuit failure, an arm short-circuit occurs when a switching element that has not failed is turned on, and a large current flows through a circuit including these two switching elements. Therefore, as described in Patent Literature 1 below, an overcurrent protection circuit is installed in a general inverter device.

In the inverter device disclosed in Patent Literature 1, a driving power supply for a switching element of upper arm is configured to be charged by turning on a switching element of lower arm. In this configuration, when a short-circuit failure occurs in the switching element of upper arm, an arm short-circuit occurs. In order to avoid this arm short-circuit, in Patent Literature 1, first, switching elements of lower arm of the respective phases are sequentially turned on for a short time, and a presence or absence of a short-circuit failure is checked by an overcurrent protection circuit. Then, when it is determined that there is no short-circuit failure, the driving power supply for the switching element of upper arm is charged.

### Citation List

### Patent Literature

Patent Literature 1: Japanese Patent No. 3397620

### Summary

### Technical Problem

However, the method of Patent Literature 1 has a problem that a short-circuit failure in the switching element of upper arm can be detected but a short-circuit failure in the switching element of lower arm cannot be detected. Further, in a method of turning off the switching element by the overcurrent protection circuit as disclosed in Patent Literature 1, the switching element may fail before the switching element is turned off, depending on a load short-circuit tolerance of the switching element.

The present disclosure has been made in view of the above, and an object is to obtain a short-circuit detection method that is for a switching element and is capable of reliably detecting a short-circuit failure in switching elements of upper arm and lower arm.

### Solution to Problem

In order to solve the above-described problem and achieve the object, a short-circuit detection method for a switching element according to the present disclosure is applicable to an inverter device including an inverter circuit, a drive circuit, and a capacitor serving as a power supply for the drive circuit of a switching element of upper arm. The inverter circuit includes two or more legs in which a switching element of upper arm connected to a positive electrode side of a DC power supply and a switching element of lower arm connected to a negative electrode side of the DC power supply are connected in series. The two or more legs are connected in parallel with each other to the DC power supply. The drive circuit drives each of a plurality of switching elements. The method includes: a first step of turning on a switching element of lower arm for a time shorter than a load short-circuit tolerance of the switching element of lower arm, before a load is driven by the inverter device. Further, the method includes: a second step of checking a presence or absence of a short circuit of a first leg including the switching element of lower arm, and then turning on the switching element of lower arm of the first leg when checking a presence or absence of a short circuit of a second leg which is a leg having a phase different from that of the first leg.

### Advantageous Effects of Invention

According to the short-circuit detection method for a switching element of the present disclosure, there is an effect of being able to reliably detect a short-circuit failure in the switching elements of upper arm and lower arm.

### Brief Description of Drawings

FIG. 1 is a circuit diagram illustrating a configuration example of an inverter device according to an embodiment.
FIG. 2 is a flowchart for explaining an operation of the inverter device according to the embodiment.
FIG. 3 is a time chart for explaining an operation of the inverter device according to the embodiment.
FIG. 4 is a perspective view illustrating a configuration example of a hand dryer device equipped with the inverter device according to the embodiment.

### Description of Embodiments

Hereinafter, a short-circuit detection method for a switching element, an inverter device, and a hand dryer device according to an embodiment of the present disclosure will be described in detail with reference to the accompanying drawings.

### Embodiment.

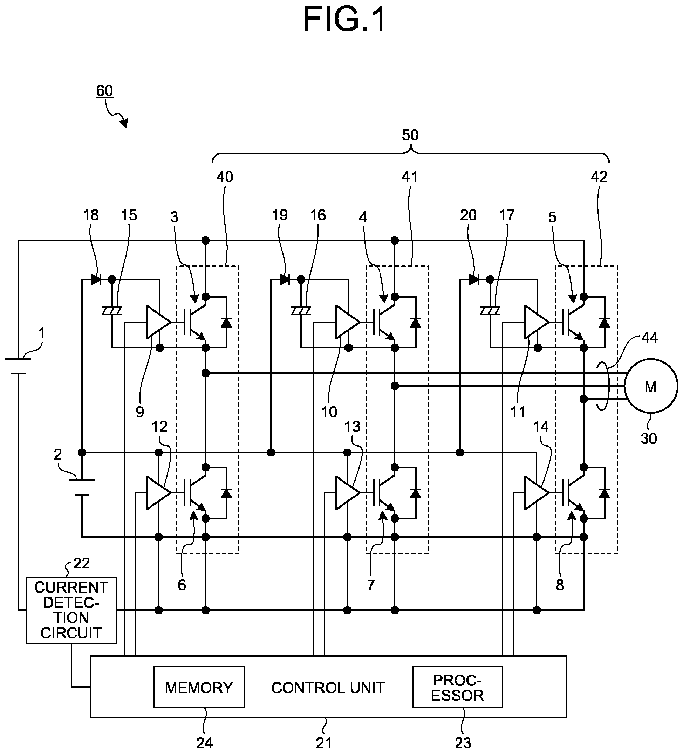

FIG. 1 is a circuit diagram illustrating a configuration example of an inverter device 60 according to an embodiment. As illustrated in FIG. 1, the inverter device 60 is a power conversion device that converts power supplied from a DC power supply 1 into AC power to a motor 30 as a load, and supplies the AC power to the motor 30. The inverter device 60 includes a lower arm driving power supply 2, an inverter circuit 50, drive circuits 9 to 14, capacitors 15 to 17, a diode 18 to 20, a control unit 21, and a current detection circuit 22. Note that the DC power supply 1 may be included in the inverter device 60.

Next, a configuration of the inverter circuit 50 will be described. The inverter circuit 50 includes switching elements 3 to 8. The switching elements 3 to 5 of upper arm are connected to a positive electrode side of the DC power supply 1, and the switching elements 6 to 8 of lower arm are connected to a negative electrode side of the DC power supply 1. The switching element 3 and the switching element 6 are connected in series to constitute a leg 40. The switching element 4 and the switching element 7 are connected in series to constitute a leg 41. The switching element 5 and the switching element 8 are connected in series to constitute a leg 42. The legs 40 to 42 are connected in parallel with each other to the DC power supply 1.

The motor 30 illustrated in FIG. 1 is a three-phase motor. Each phase winding (not illustrated) in the motor 30 is connected to a wiring 44 drawn out from each of the legs 40 to 42. Note that the motor 30 may be a single-phase motor. In a case where the motor 30 is a single-phase motor, the inverter circuit 50 is operable with two legs. Further, the motor 30 may be a multiphase motor. In a case where the motor 30 is a multiphase motor, the inverter circuit 50 is configured to include a number of legs, the number of which corresponds to the multiphase motor.

The capacitors 15 to 17 are used as a driving power supply for the switching elements 3 to 5 of upper arm. The capacitor 15 is connected to the lower arm driving power supply 2 via the diode 18. This similarly applies to the capacitors 16 and 17, and the capacitor 16 is connected to the lower arm driving power supply 2 via the diode 19, and the capacitor 17 is connected to the lower arm driving power supply 2 via the diode 20.

Each of the drive circuits 9 to 11 is a drive circuit of the switching elements 3 to 5 of upper arm. The drive circuit 9 is applied with a voltage of the capacitor 15, and uses the voltage to drive the switching element 3. The drive circuits 10 and 11 also have a similar configuration, and the drive circuit 10 drives the switching element 4 by using a voltage applied from the capacitor 16. Further, the drive circuit 11 drives the switching element 5 by using a voltage applied from the capacitor 17.

Each of the drive circuits 12 to 14 is a drive circuit of the switching elements 6 to 8 of lower arm. To each of the drive circuits 12 to 14, a voltage of the lower arm driving power supply 2 is applied. Each of the drive circuits 12 to 14 drives the switching elements 6 to 8 by using a voltage applied from the lower arm driving power supply 2.

The current detection circuit 22 is connected between a connection point of the legs 40 to 42 and the negative electrode side of the DC power supply 1. The current detection circuit 22 detects a current of the DC power supply 1, that is, a current flowing in and out of the DC power supply 1.

The control unit 21 includes a processor 23 and a memory 24. The control unit 21 is connected to the drive circuits 9 to 14 and the current detection circuit 22. The processor 23 is a processing unit that executes a function of the control unit 21 described below. In the memory 24, a program read by the processor 23 is stored. The memory 24 is also used as a work area when the processor 23 performs arithmetic processing. Note that the processor 23 may be one referred to as a central processing unit (CPU), a microprocessor, a microcomputer, a digital signal processor (DSP), or the like. Further, the memory 24 is generally a nonvolatile or volatile semiconductor memory such as a random access memory (RAM), a flash memory, an erasable programmable ROM (EPROM), or an electrically EPROM (EEPROM (registered trademark)).

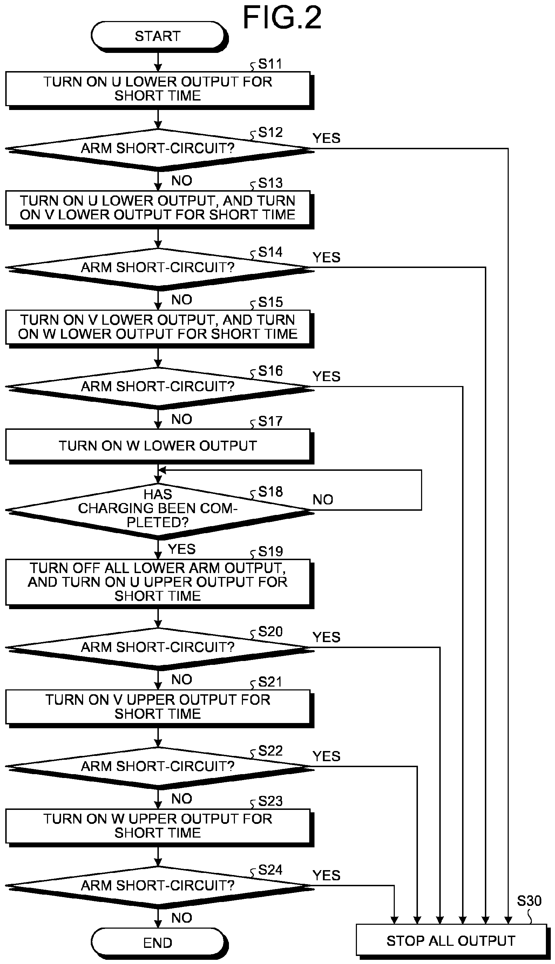

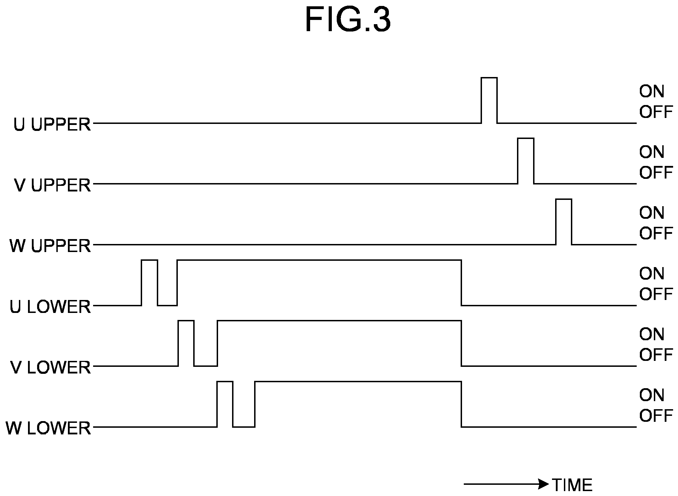

Next, an operation of the inverter device 60 according to an embodiment will be described with reference to the drawings of FIGS. 1 to 3. FIG. 2 is a flowchart for explaining an operation of the inverter device 60 according to the embodiment. FIG. 3 is a time chart for explaining an operation of the inverter device 60 according to the embodiment. Note that, in FIG. 2, outputting an operation signal to each of the drive circuits 9 to 14 is expressed individually as "U upper output", "V upper output", "W upper output", "U lower output", "V lower output", and "W lower output". Further, in FIG. 3, operation signals to the drive circuits 9 to 14 are expressed individually as "U upper", "V upper", "W upper", "U lower", "V lower", and" W lower".

First, in step S11, the control unit 21 turns on the switching element 6 of lower arm via the drive circuit 12 for a short time. As an ON time period, in the processor 23 in advance, a time period is set that is sufficiently shorter than a load short-circuit tolerance of the switching element 6 of lower arm, and that allows a current to be detected by the current detection circuit 22 when an arm short-circuit occurs. An example of the ON time period is about 50% of the load short-circuit tolerance of each switching element.

When the switching element 6 is turned on, a potential on a negative side of the capacitor 15 becomes substantially equal to a potential on a negative side of the DC power supply 1. At this time, a charging current flows from the lower arm driving power supply 2 to the capacitor 15 via the diode 18. As a result, the capacitor 15 is charged to a potential substantially equal to the lower arm driving power supply 2. Thereafter, even if the switching element 6 of lower arm is turned off, no current flows to the lower arm driving power supply 2 by the diode 18, and electric charges of the capacitor 15 are held. Note that, when the switching element 6 of lower arm has been turned on, a potential on a negative side of the capacitors 16 and 17 is also electrically connected via the motor 30, so that the potential approaches the potential on the negative side of the DC power supply 1. Since the capacitors 16 and 17 are charged via the motor 30, a charging speed is slower than a charging speed of the capacitor 15, but a charging voltage is equal to or equivalent to that of the capacitor 15.

In the next step S12, the control unit 21 determines a presence or absence of an arm short-circuit in the leg 40 including the switching element 6 of lower arm, on the basis of a current detection signal of the current detection circuit 22. When it is determined that there is an arm short-circuit (step S12, Yes), the process proceeds to step S30 to stop all the output. When it is determined that there is no arm short-circuit (step S12, No), the process proceeds to step S13.

In step S13, the control unit 21 turns on the switching element 6 of lower arm via the drive circuit 12, and turns on the switching element 7 of lower arm via the drive circuit 13 for a short time similarly to step S11. Here, it has already been confirmed in step S12 that an arm short-circuit does not occur in the leg 40 including the switching elements 3 and 6 of upper and lower arm even when the switching element 6 of lower arm is turned on. Therefore, the control unit 21 keeps the switching element 6 being on until charging of the capacitors 15 to 17 is completed.

In the next step S14, the control unit 21 determines a presence or absence of an arm short-circuit in the leg 41 including the switching element 7 of lower arm, on the basis of a current detection signal of the current detection circuit 22. When it is determined that there is an arm short-circuit (step S14, Yes), the process proceeds to step S30 to stop all the output. When it is determined that there is no arm short-circuit (step S14, No), the process proceeds to step S15.

In step S15, the control unit 21 turns on the switching element 7 of lower arm via the drive circuit 13, and turns on the switching element 8 of lower arm via the drive circuit 14 for a short time. Here, it has already been confirmed in step S14 that an arm short-circuit does not occur in the leg 41 including the switching elements 4 and 7 of upper and lower arm even when the switching element 7 of lower arm is turned on. Therefore, the control unit 21 keeps the switching element 7 of lower arm being on until charging of the capacitors 15 to 17 is completed. That is, the switching elements 6 and 7 of lower arm continue to be on until charging of the capacitors 15 to 17 is completed.

In the next step S16, the control unit 21 determines a presence or absence of an arm short-circuit in the leg 42 including the switching element 8 of lower arm, on the basis of a current detection signal of the current detection circuit 22. When it is determined that there is an arm short-circuit (step S16, Yes), the process proceeds to step S30 to stop all the output. When it is determined that there is no arm short-circuit (step S16, No), the process proceeds to step S17.

By the processing up to step S16, it can be confirmed that an arm short-circuit does not occur even when the switching elements 6 to 8 of lower arm in individual legs are turned on, that is, a short-circuit failure has not occurred in the switching elements 3 to 5 of upper arm. Further, after the confirmation that an arm short-circuit has not occurred in the leg 40 including the switching element 6 of lower arm and the leg 41 including the switching element 7 of lower arm, the switching elements 6 and 7 of lower arm are controlled to be always on. As a result, the capacitors 15 and 16 are naturally charged, and the capacitor 17 is also charged via the motor 30.

In the next step S17, the control unit 21 turns on the switching element 8 of lower arm via the drive circuit 14. As a result, all the switching elements 6 to 8 of lower arm are turned on.

In the next step S18, the control unit 21 determines whether or not charging of the capacitors 15 to 17 has been completed. When the charging of the capacitors 15 to 17 has not been completed (step S18, No), the determination processing in step S18 is appropriately repeated. When the charging of the capacitors 15 to 17 has been completed (step S18, Yes), the process proceeds to step S19. Note that a time until completion of charging is determined in advance on the basis of a capacity of the capacitors 15 to 17, a motor constant in the motor 30, and the like, and is stored in the memory 24. The control unit 21 determines that the charging has been completed when the set time elapses.

In the next step S19, the control unit 21 turns off all the switching elements 6 to 8 of lower arm and turns on the switching element 3 of upper arm via the drive circuit 9 for a short time. The meaning of the short time is the same as that in steps S11, S13, and S15.

In the next step S20, the control unit 21 determines a presence or absence of an arm short-circuit in the leg 40 including the switching element 3 of upper arm, on the basis of a current detection signal of the current detection circuit 22. When it is determined that there is an arm short-circuit (step S20, Yes), the process proceeds to step S30 to stop all the output. When it is determined that there is no arm short-circuit (step S20, No), the process proceeds to step S21.

In step S21, the control unit 21 turns on the switching element 4 of upper arm via the drive circuit 10 for a short time.

In the next step S22, the control unit 21 determines a presence or absence of an arm short-circuit in the leg 41 including the switching element 4 of upper arm, on the basis of a current detection signal of the current detection circuit 22. When it is determined that there is an arm short-circuit (step S22, Yes), the process proceeds to step S30 to stop all the output. When it is determined that there is no arm short-circuit (step S22, No), the process proceeds to step S23.

In step S23, the control unit 21 turns on the switching element 5 of upper arm via the drive circuit 11 for a short time.

In the next step S24, the control unit 21 determines a presence or absence of an arm short-circuit in the leg 42 including the switching element 5 of upper arm, on the basis of a current detection signal of the current detection circuit 22. When it is determined that there is an arm short-circuit (step S24, Yes), the process proceeds to step S30 to stop all the output. When it is determined that there is no the arm short-circuit (step S24, No), the processing flow of FIG. 2 ends.

When it is determined in step S24 that there is no arm short-circuit, it can be seen that there is no short-circuit failure in the switching elements 3 to 8. In addition, since the completion of charging of the capacitors 15 to 17 has been confirmed by the determination in step S18, the inverter device 60 is brought into an operable state.

FIG. 3 is a timing chart illustrating the operation described above. FIG. 3 illustrates operation signals to the drive circuits 9 to 14 in order from an upper side. The operation signals to the drive circuits 9 to 14 indicate states of the switching elements 3 to 8.

Note that, in the examples of FIGS. 2 and 3, the switching elements 6 to 8 of lower arm are turned on in this order, and the switching elements 3 to 5 of upper arm are turned on in this order after charging of the capacitors 15 to 17 is completed, but the present disclosure is not limited thereto. The order of turning on the individual switching elements may be freely changed.

In addition, in the embodiment, the switching elements 6 to 8 of lower arm and the switching elements 3 to 5 of upper arm are sequentially turned on individually to specify a failure location, but the present disclosure is not limited thereto. If it is not necessary to specify the failure location, two or three among the switching elements 6 to 8 of lower arm may be simultaneously turned on for a short time to check a presence or absence of an arm short-circuit. Similarly, if it is not necessary to specify the failure location, two or three among the switching elements 3 to 5 of upper arm may be simultaneously turned on for a short time to check a presence or absence of an arm short-circuit. By operating in this manner, the time until the inverter device 60 becomes operable can be further shortened.

As described above, the short-circuit detection method for a switching element according to the embodiment includes: a first step of turning on a switching element of lower arm for a time shorter than a load short-circuit tolerance of the switching element of lower arm, before a load is driven by the inverter device. Further, the method includes: a second step of checking a presence or absence of a short circuit of a first leg including the switching element of lower arm, and then turning on the switching element of lower arm of the first leg when checking a presence or absence of a short circuit of a second leg which is a leg having a phase different from that of the first leg. The processing according to the first and second steps is applicable to an inverter device including two or more legs in which a switching element of upper arm and a switching element of lower arm are connected in series, and having a configuration in which the two or more legs are connected in parallel with each other to a DC power supply. As a result, it is possible to shorten a charging time of a capacitor serving as a power supply of a drive circuit of the switching element of upper arm while detecting a short-circuit failure of the switching element of upper arm.

Further, the short-circuit detection method for a switching element according to the embodiment may include: a third step of confirming completion of charging of the capacitor after the second step; and a fourth step of turning on the switching element of upper arm for a time shorter than a load short-circuit tolerance of the switching element of upper arm, and checking a presence or absence of a short circuit of a leg including the switching element of upper arm. As a result, it is possible to shorten the time until the inverter device becomes operable while reliably detecting a short-circuit failure of the switching element of lower arm.

Further, the short-circuit detection method for a switching element according to the embodiment includes: a first step of simultaneously turning on a plurality of switching elements of lower arm for a time shorter than a load short-circuit tolerance of each switching element before a load is driven by the inverter device. Further, the method also includes a second step of checking, after the first step, a presence or absence of a short circuit of each of a plurality of legs including each switching element of lower arm. This method may be used if it is not necessary to specify a failure location. According to this method, a time until the inverter device becomes operable can be further shortened.

Further, the short-circuit detection method for a switching element according to the embodiment may include: a third step of confirming completion of charging of the capacitor after the second step; and a fourth step of simultaneously turning on a plurality of switching elements of upper arm for a time shorter than a load short-circuit tolerance of each switching element of upper arm. As a result, it is possible to further shorten the time until the inverter device becomes operable while reliably detecting a short-circuit failure of the switching element of lower arm.

Further, according to the inverter device according to the embodiment, the control unit turns on the switching element of lower arm for a time shorter than a load short-circuit tolerance of the switching element of lower arm, and checks a presence or absence of a short circuit of the first leg including the switching element of lower arm. Further, the control unit turns on the switching element of lower arm of the first leg when checking a presence or absence of a short circuit of the second leg that is a leg having a phase different from that of the first leg. These controls are applicable to an inverter device including two or more legs in which a switching element of upper arm and a switching element of lower arm are connected in series, and having a configuration in which the two or more legs are connected in parallel with each other to a DC power supply. As a result, it is possible to shorten a charging time of a capacitor serving as a power supply of a drive circuit of the switching element of upper arm while detecting a short-circuit failure of the switching element of upper arm.

Further, according to the inverter device according to the embodiment, after completion of charging of the capacitor, the control unit turns on a switching element of upper arm for a time shorter than a load short-circuit tolerance of the switching element of upper arm, and checks a presence or absence of a short circuit of a leg including the switching element of upper arm. As a result, it is possible to shorten the time until the inverter device becomes operable while reliably detecting a short-circuit failure of the switching element of lower arm.

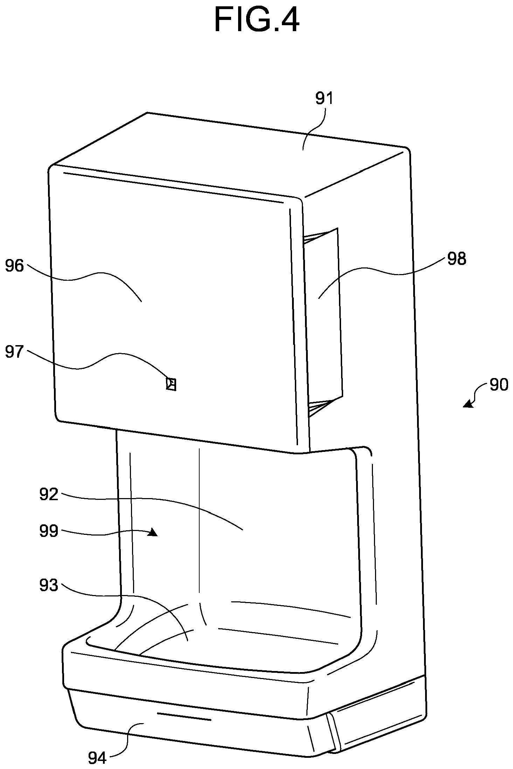

Next, an application example of the inverter device 60 according to the embodiment will be described. FIG. 4 is a perspective view illustrating a configuration example of a hand dryer device 90 on which the inverter device 60 according to the embodiment is equipped.

The hand dryer device 90 includes a casing 91, a hand detection sensor 92, a water receiver 93, a drain container 94, a cover 96, a sensor 97, and an air inlet 98. Here, the sensor 97 is either a gyro sensor or a human sensor. The hand dryer device 90 includes an electric blower (not illustrated) in the casing 91. The electric blower includes the inverter device 60 and the motor 30 described above. The hand dryer device 90 has a structure in which water is blown off with air blown by the electric blower, when a hand is inserted into a hand insertion part 99 above the water receiver 93, and the water is stored from the water receiver 93 into the drain container 94.

The hand dryer device 90 is a product whose time until activation is directly linked to performance. The inverter device 60 according to the embodiment can detect a short-circuit failure in a switching element in a short time. In addition, according to the inverter device 60 according to the embodiment, a driving power supply for the switching element of upper arm can be charged in a short time. Therefore, the hand dryer device 90 equipped with the inverter device 60 according to the embodiment can receive these effects.

The configuration illustrated in the above embodiment illustrates one example and can be combined with another known technique, and it is also possible to omit and change a part of the configuration without departing from the subject matter.

### Reference Signs List

1 DC power supply; 2 lower arm driving power supply; 3 to 8 switching element; 9 to 14 drive circuit; 15 to 17 capacitor; 18 to 20 diode; 21 control unit; 22 current detection circuit; 23 processor; 24 memory; 30 motor; 40 to 42 leg; 44 wiring; 50 inverter circuit; 60 inverter device; 90 hand dryer device; 91 casing; 92 hand detection sensor; 93 water receiver; 94 drain container; 96 cover; 97 sensor; 98 air inlet; 99 hand insertion part.

## Claims

1. A short-circuit detection method for a switching element, the short-circuit detection method being applied to an inverter device, the inverter device comprising: an inverter circuit including two or more legs in which a switching element of upper arm connected to a positive electrode side of a direct current (DC) power supply and a switching element of lower arm connected to a negative electrode side of the DC power supply are connected in series, two or more of the legs being connected in parallel with each other to the DC power supply; a drive circuit to drive each of a plurality of the switching elements; and a capacitor serving as a power supply of the drive circuit of the switching element of upper arm,
the short-circuit detection method comprising:
a first step of turning on the switching element of lower arm for a time shorter than a load short-circuit tolerance of the switching element of lower arm, before a load is driven by the inverter device; and
a second step of checking a presence or absence of a short circuit of a first leg including the switching element of lower arm, and then turning on the switching element of lower arm of the first leg when checking a presence or absence of a short circuit of a second leg that is a leg having a phase different from that of the first leg.

2. A short-circuit detection method for a switching element, the short-circuit detection method being applied to an inverter device, the inverter device comprising: an inverter circuit including two or more legs in which a switching element of upper arm connected to a positive electrode side of a direct current (DC) power supply and a switching element of lower arm connected to a negative electrode side of the DC power supply are connected in series, two or more of the legs being connected in parallel with each other to the DC power supply; a drive circuit to drive each of a plurality of the switching elements; and a capacitor serving as a power supply of the drive circuit of the switching element of upper arm,
the short-circuit detection method comprising:
a first step of simultaneously turning on a plurality of the switching elements of lower arm for a time shorter than a load short-circuit tolerance of each of the switching elements, before a load is driven by the inverter device; and
a second step of checking, after the first step, a presence or absence of a short circuit of each of a plurality of legs including each of the switching elements of lower arm.

3. The short-circuit detection method for a switching element according to claim 1 or 2, the short-circuit detection method comprising:
a third step of confirming completion of charging of the capacitor after the second step; and
a fourth step of turning on the switching element of upper arm for a time shorter than a load short-circuit tolerance of the switching element of upper arm, and checking a presence or absence of a short circuit of a leg including the switching element of upper arm.

4. The short-circuit detection method for a switching element according to claim 2, the short-circuit detection method comprising:
a third step of checking completion of charging of the capacitor after the second step; and
a fourth step of simultaneously turning on a plurality of the switching elements of upper arm for a time shorter than a load short-circuit tolerance of each of the switching elements of upper arm.

5. The short-circuit detection method for a switching element according to any one of claims 1 to 4, wherein, when a short-circuit failure of any one of a plurality of the switching elements is detected, all the switching elements are turned off.

6. A hand dryer device equipped with the inverter device, wherein the inverter device is operated by applying the short-circuit detection method for a switching element according to any one of claims 1 to 5.

7. An inverter device comprising:
an inverter circuit including two or more legs in which a switching element of upper arm connected to a positive electrode side of a direct current (DC) power supply and a switching element of lower arm connected to a negative electrode side of the DC power supply are connected in series, two or more of the legs being connected in parallel with each other to the DC power supply;
a drive circuit to drive each of a plurality of the switching elements;
a capacitor serving as a power supply of the drive circuit of the switching element of upper arm; and
a control unit to control an operation of the inverter circuit, wherein
the control unit turns on the switching element of lower arm for a time shorter than a load short-circuit tolerance of the switching element of lower arm, checks a presence or absence of a short circuit of a first leg including the switching element of lower arm, and then turns on the switching element of lower arm of the first leg when checking a presence or absence of a short circuit of a second leg that is a leg having a phase different from that of the first leg.

8. The inverter device according to claim 7, wherein, after completion of charging of the capacitor, the switching element of upper arm is turned on for a time shorter than a load short-circuit tolerance of the switching element of upper arm, and a presence or absence of a short circuit of a leg including the switching element of upper arm is checked.

9. A hand dryer device equipped with the inverter device according to claim 7 or 8.
